# EUROPEAN PATENT APPLICATION

(11) **EP 4 782 245 A1**
(43) Date of publication of application: **29.07.2026**
(21) Application number: 26153254.3
(22) Date of filing: 21.01.2026
(51) Int. Cl.: B60K 35/10, B60K 35/22, B60K 35/81, G09G 5/10

(54) **IN-VEHICLE SYSTEM AND INFORMATION PROCESSING APPARATUS**

(30) Priority: 24.01.2025 JP 2025010566
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system includes a display device and an information processing apparatus, the display device including a plurality of display units including at least a first display unit arranged in front of a steering wheel in front of a driver's seat in a vehicle interior, and a pair of second display units arranged at positions on both sides of the steering wheel while protruding more rearward in a vehicle than the first display unit. In a case where changing luminance of the plurality of display units successively, the information processing apparatus starts change of the luminance of the first display unit and change of the luminance of the pair of second display units at different timings.

## Description

### BACKGROUND

### Technical Field

The present disclosure relates to an in-vehicle system and an information processing apparatus.

### Description of the Related Art

A vehicle is known, which includes a steering wheel, a center display unit provided in front of the steering wheel, and a side display unit provided on one side or both sides of the center display unit in a vehicle width direction (see, for example, Patent Literature 1).

Further, a technology is known that controls luminance of a cab display in accordance with brightness outside a vehicle in an electric rolling stock (see, for example, Patent Literature 2). Still further, a technology is known that, when input operation is performed at a mobile terminal including a plurality of display units, decreases luminance of a display unit that does not respond to the input operation among the plurality of display units to be lower than current luminance (see, for example, Patent Literature 3).

### Citation List

### Patent Literature

Patent Literature 1: Japanese Patent No. 7306210
Patent Literature 2: Japanese Patent Laid-Open No. 2014-025845
Patent Literature 3: Japanese Patent Laid-Open No. 2012-220550

### SUMMARY

An object of the present disclosure is to adjust luminance of each of a plurality of display units provided in a front portion of a vehicle interior to luminance suitable for a driver.

An in-vehicle system according to a first aspect of the present disclosure may be an in-vehicle system including a display device and an information processing apparatus that controls the display device, the display device including a plurality of display units including at least a first display unit arranged in front of a steering wheel in front of a driver's seat in a vehicle interior, and a pair of second display units arranged at positions on both sides of the steering wheel while protruding more rearward in a vehicle than the first display unit,
the information processing apparatus may include a controller configured to execute:
in a case where a signal that gives a command to adjust luminance of the plurality of display units is received, calculating a luminance control value for each of the first display unit and the pair of second display units based on an instructed level of luminance included in the signal, and adjusting the luminance of the first display unit and the pair of second display units by transmitting a control signal including the calculated luminance control value to the display device, and
in a case where a signal that gives a command to adjust luminance while successively changing the luminance of the plurality of display units, starting change of the luminance of the first display unit and change of the luminance of the pair of second display units at different timings.

An in-vehicle system according to a second aspect of the present disclosure may be an in-vehicle system including a display device and an information processing apparatus that controls the display device, the display device including a plurality of display units including at least a first display unit arranged in front of a steering wheel in front of a driver's seat in a vehicle interior, and a pair of second display units arranged at positions on both sides of the steering wheel while protruding more rearward in a vehicle than the first display unit, and
the information processing apparatus may include a controller configured to execute:
in a case where changing luminance of the plurality of display units successively, starting change of the luminance of the first display unit and change of the luminance of the pair of second display units at different timings.

An information processing apparatus according to a third aspect of the present disclosure may be an information processing apparatus that controls a display device including a plurality of display units including at least a first display unit arranged in front of a steering wheel in front of a driver's seat in a vehicle interior, and a pair of second display units arranged at positions on both sides of the steering wheel while protruding more rearward in a vehicle than the first display unit, and
the information processing apparatus may include a controller configured to execute:
in a case where changing luminance of the plurality of display units successively, starting change of the luminance of the first display unit and change of the luminance of the pair of second display units at different timings.

According to the present disclosure, it is possible to adjust luminance of each of a plurality of display units provided in a front portion of a vehicle interior to luminance suitable for a driver.

### BRIEF DESCRIPTION OF THE DRAWINGS

Fig. 1 is a view illustrating an aspect of a front portion of a vehicle interior of a vehicle according to an embodiment;
Fig. 2 is a view illustrating a schematic configuration of a display device and its circumference;
Fig. 3 is a block diagram schematically illustrating an example of a hardware configuration of a system mounted on the vehicle;
Fig. 4 is a block diagram schematically illustrating an example of a functional configuration of an ECU;
Fig. 5 is a view indicating an example of a control value map to be used to calculate a luminance control value of a meter display and a luminance control value of an inner display and an outer display according to a first embodiment;
Fig. 6 is a first flowchart indicating flow of luminance adjustment control according to the embodiment;
Fig. 7 is a second flowchart indicating flow of the luminance adjustment control according to the embodiment; and
Fig. 8 is a view indicating an example of a control value map to be used to calculate a luminance control value of a meter display, a luminance control value of an inner display, and a luminance control value of an outer display according to a second embodiment.

### DESCRIPTION OF THE EMBODIMENTS

In recent years, a vehicle in which a plurality of displays is provided in a front portion of a vehicle interior has been developed. In a vehicle having such a configuration, a driver may feel that display of the plurality of displays is too bright or may feel it difficult to view the display of the plurality of displays. As a measure against such a case, it is conceivable to adjust luminance of the plurality of displays. However, the plurality of displays respectively has different positional relationships with the driver. Thus, uniformly adjusting the luminance of the plurality of displays to solve the problem that the driver feels that the display of the plurality of displays is too bright or feels it difficult to view the display of the plurality of displays is not always optimal for the driver.

To address this, an in-vehicle system that is one aspect of the present disclosure may be an in-vehicle system including a display device and an information processing apparatus that controls the display device, the display device including a plurality of display units including at least a first display unit arranged in front of a steering wheel in front of a driver's seat in a vehicle interior, and a pair of second display units arranged at positions on both sides of the steering wheel while protruding more rearward in a vehicle than the first display unit, and the information processing apparatus may include a controller configured to execute, in a case where changing luminance of the plurality of display units successively, starting change of the luminance of the first display unit and change of the pair of second display units at different timings.

The in-vehicle system includes the display device and the information processing apparatus. Further, the display device includes the plurality of display units including at least the first display unit and two second display units. The first display unit is arranged in front of the steering wheel in front of the driver's seat in the vehicle interior. The two second display units are respectively arranged at positions on both sides of the steering wheel while protruding more rearward in the vehicle than the first display unit so as to pair up with each other. In other words, in the driver's seat in the vehicle interior of the vehicle on which the in-vehicle system is mounted, the pair of second display units is arranged at positions closer to the driver's seat than the first display unit. Further, the information processing apparatus includes the controller that controls the display device.

The controller of the information processing apparatus may execute luminance adjustment of the plurality of display units including the first display unit and the pair of second display units. For example, the controller may execute luminance adjustment of the plurality of display units in accordance with operation for adjusting luminance performed by the driver. Further, the controller may automatically execute luminance adjustment of the plurality of display units in accordance with change in brightness of an environment outside the vehicle. Still further, there is a case where the controller successively changes the luminance of the plurality of display units. In other words, there is a case where the controller gradually decreases or increases the luminance of the plurality of display units.

In this event, the controller may start change of the luminance of the first display unit and change of the luminance of the pair of second display units at different timings. For example, in a case where the decreasing luminance of the plurality of display units successively, the controller may start decrease of the luminance of the pair of second display units before decrease of the luminance of the first display unit. Further, increasing in a case where the luminance of the plurality of display units successively, the controller may start increase of the luminance of the first display unit before increase of the luminance of the pair of second display units.

According to the in-vehicle system as described above, upon adjustment of the luminance of the first display unit and the pair of second display units, the luminance of the respective display units can be changed at timings in accordance with a positional relationship between the first display unit and the driver and a positional relationship between the pair of second display units and the driver. It is therefore possible to adjust the luminance of each of the first display unit and the pair of second display units provided in the front portion of the vehicle interior to luminance suitable for the driver.

Specific embodiments of the present disclosure will be described below based on the drawings. Dimensions, materials, shapes, relative arrangement, and the like, of components described in the present embodiment do not intend to limit the technical scope of the present disclosure thereto unless otherwise specified.

### <First Embodiment>

### (Schematic Configuration of System)

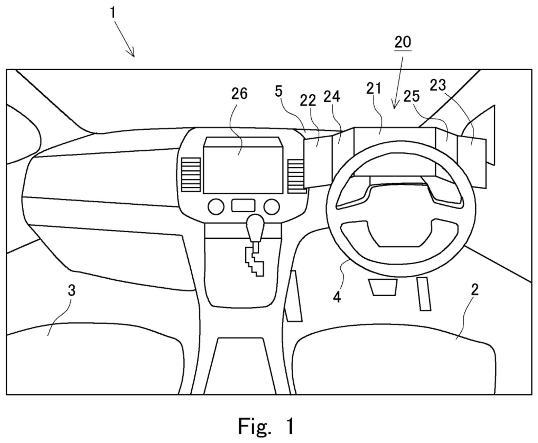

Fig. 1 is a view illustrating an aspect of a front portion of a vehicle interior of a vehicle according to the present embodiment. In the vehicle interior of a vehicle 1, a driver's seat 2 and a passenger's seat 3 are provided. Note that the vehicle 1 of the present embodiment is a right-hand drive vehicle, and the driver's seat 2 is provided on a right side in a traveling direction of the vehicle 1. A steering wheel 4 is disposed in front of the driver's seat 2. The steering wheel 4 may be a circular steering wheel or a U-shaped steering wheel (so-called irregularly shaped steering wheel). The steering wheel 4 is connected to a steering device provided in the vehicle 1 via a steering column. The steering column is covered with a column cover. Further, the passenger's seat 3 is provided on a left side (left side in the traveling direction of the vehicle 1) of the driver's seat 2 in the vehicle interior of the vehicle 1.

A display device 20 is provided in the front portion of the vehicle interior of the vehicle 1. The display device 20 includes a plurality of displays 21, 22, 23, 26. Specifically, the display device 20 includes a meter display 21, an inner display 22, an outer display 23, and a center display 26. The meter display 21 is located in front of the steering wheel 4 (in a substantially central portion of a front portion of the driver's seat 2) in front of the driver's seat 2. The inner display 22 is located on a rear side of the meter display 21 in the vehicle 1 and on an inner side of the vehicle 1. The outer display 23 is located on a rear side of the meter display 21 in the vehicle 1 and on an outer side of the vehicle 1. The inner display 22 is connected to the meter display 21 via a connection portion 24. The outer display 23 is connected to the meter display 21 via a connection portion 25.

The center display 26 is located at an intermediate position between the driver's seat 2 and the passenger's seat 3 (in a substantially central portion of the front portion of the vehicle interior) in the front portion of the vehicle interior. In other words, the center display 26 is provided closer to the passenger's seat 3 than the meter display 21, the inner display 22, and the outer display 23 in the front portion of the vehicle interior.

Note that in the present embodiment, the meter display 21 corresponds to a "first display unit" according to the present disclosure, and the inner display 22 and the outer display 23 correspond to a "pair of second display units" according to the present disclosure. Further, in the present embodiment, the center display 26 corresponds to a "third display unit" according to the present disclosure.

Here, the outer side of the vehicle 1 refers to a side closer to the outside of the vehicle 1 as viewed from the driver's seat 2 and refers to a door side of the driver's seat 2. Further, the inner side of the vehicle 1 refers to the passenger's seat 3 side as viewed from the driver's seat 2 and refers to a door side of the passenger's seat 3. For example, in the vehicle 1 in which the steering wheel is provided on a right side of the vehicle 1, the outer side of the vehicle 1 indicates the right side of the vehicle 1, and the inner side of the vehicle 1 indicates a left side of the vehicle 1. Further, for example, in the vehicle 1 in which the steering wheel 4 is provided on the left side of the vehicle 1, the outer side of the vehicle 1 indicates the left side of the vehicle 1, and the inner side of the vehicle 1 indicates the right side of the vehicle 1.

The meter display 21, the inner display 22, the outer display 23, and the center display 26 are all displays including touch panels. Note that it is only necessary that at least the inner display 22 and the outer display 23 include the touch panels. Note that the meter display 21, the inner display 22, and the outer display 23 may be formed by deforming one touch screen or may be formed by combining individual touch screens.

Note that as the touch panel of each display of the display device 20, for example, a pressure-sensitive touch panel that detects a pressure when a user presses the panel, a capacitive touch panel that detects change of capacitance when the user presses the panel, or the like, can be employed. Further, the display is, for example, a liquid crystal display (LCD), an electroluminescence (EL) panel, or the like. In the following description, touch by the user means touch on the touch panel by the user.

Auxiliary information (for example, car navigation information) regarding driving to be provided to the driver of the vehicle 1 may be displayed on the center display 26. Further, information regarding entertainment such as audio or TV may be displayed on the center display 26.

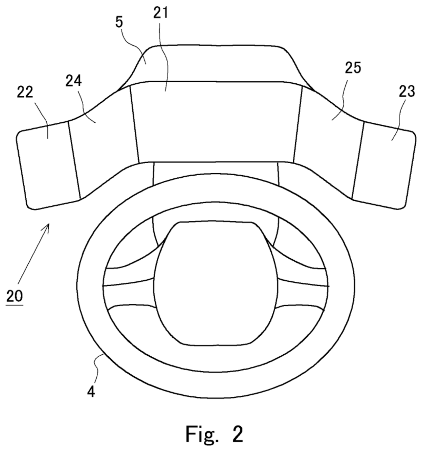

Here, more detailed configurations of the meter display 21, the inner display 22, and the outer display 23 in the display device 20 will be described based on Fig. 2. Fig. 2 is a view illustrating a schematic configuration of the display device 20 and its circumference. The meter display 21 of the display device 20 is fixed to an instrument panel 5. The meter display 21 is a horizontally elongated display, and the inner display 22 and the outer display 23 are vertically elongated displays. The meter display 21 is arranged such that a screen faces rearward of the vehicle, and is arranged in parallel to a left and right direction (vehicle width direction) of the vehicle 1. Note that the meter display 21 may be arranged while being inclined to face slightly upward.

One end of the connection portion 24 is connected to an end portion on a vehicle inner side, of the meter display 21, and the inner display 22 is connected to the other end of the connection portion 24. The inner display 22 is a display extending to the rear side of the vehicle 1 and the inner side of the vehicle 1 from an end portion on the vehicle inner side, of the connection portion 24. Note that an angle of the inner display 22 with respect to the meter display 21 is smaller than an angle of the connection portion 24 with respect to the meter display 21. Further, the connection portion 24 is connected to the meter display 21 and the inner display 22 while being curved. The connection portion 24 includes a curved surface that dents on a vehicle front side at a connection portion with the meter display 21 and includes a curved surface that bulges on a vehicle rear side at a connection portion with the inner display 22. Note that the meter display 21 and the inner display 22 may include curved surfaces.

One end of the connection portion 25 is connected to an end portion on a vehicle outer side, of the meter display 21, and the outer display 23 is connected to the other end of the connection portion 25. The outer display 23 is a display extending to the rear side of the vehicle 1 and the outer side of the vehicle 1 from an end portion on the vehicle outer side, of the connection portion 25. Note that an angle of the outer display 23 with respect to the meter display 21 is smaller than an angle of the connection portion 25 with respect to the meter display 21. The connection portion 25 is connected to the meter display 21 and the outer display 23 while being curved. The connection portion 25 includes a curved surface that dents on the vehicle front side at a connection portion with the meter display 21 and includes a curved surface that bulges on the vehicle rear side at a connection portion with the outer display 23. Note that the outer display 23 may include a curved surface.

The steering wheel 4 includes a gripping portion that is a portion to be gripped by the driver. Further, as a result of, in the display device 20, the meter display 21, the inner display 22, the outer display 23, and the connection portions 24, 25 having the shapes as described above, the inner display 22 and the outer display 23 are arranged in the vicinity of the gripping portion on the steering wheel 4.

Further, each of the inner display 22 and the outer display 23 has an angle with respect to the left and right direction of the steering wheel 4 and is arranged to be inclined toward the steering wheel 4. In other words, the inner display 22 protrudes more rearward of the vehicle 1 as it goes inward of the vehicle 1, and the outer display 23 is arranged to protrude more rearward of the vehicle 1 as it goes outward of the vehicle 1. In this manner, each of the inner display 22 and the outer display 23 is arranged to face the driver.

The meter display 21 displays information necessary for traveling of the vehicle 1 such as, for example, a speed of the vehicle 1, an engine rotation speed (in a case where the vehicle 1 has an engine), a charging/discharging condition (in a case where the vehicle 1 includes a battery for driving), a traveling distance, and a state of an ADAS.

The inner display 22 displays, for example, information regarding convenience of occupants of the vehicle 1 as content. The information regarding convenience of the occupants of the vehicle 1 includes information for providing entertainment to the occupants of the vehicle 1. The information regarding convenience of the occupants of the vehicle 1 may include information related to comfortability of the occupants, and the like. The information regarding comfortability and convenience of the occupants includes, for example, information regarding switches, buttons, and the like, for performing operation of audio, operation of a navigation device, operation of an air conditioner, operation of a phone, operation of a clock, operation of a voice assistant, and the like, and information regarding operating conditions of these devices.

The outer display 23 displays, for example, information regarding control of the vehicle 1 as content. The information regarding control of the vehicle 1 includes information regarding traveling of the vehicle 1. The information regarding control of the vehicle 1 includes, for example, information regarding switches, buttons, and the like, for performing operation of a headlight, operation of a wiper, operation of a sideview mirror, operation of the ADAS, operation of a drive mode, operation of a vehicle height, operation of a position of the steering wheel, operation of a seat position, and the like, and information regarding operating conditions of these devices.

Note that the information to be displayed on the inner display 22 and the outer display 23 is not limited to the above. The inner display 22 may display the information regarding control of the vehicle 1, and the outer display 23 may display the information regarding convenience of the occupants of the vehicle 1. Further, the information to be displayed on the inner display 22 and the outer display 23 can be freely determined.

Further, in the following description, the meter display 21, the inner display 22, and the outer display 23 may be generally referred to as driver's seat displays. Further, a slider switch for performing operation of luminance adjustment of the driver's seat displays 21, 22, 23, 26 is displayed on the inner display 22 as information related to convenience of the occupants of the vehicle 1.

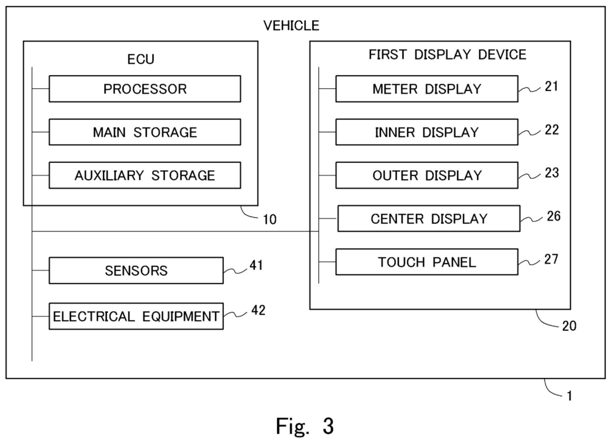

Fig. 3 is a block diagram schematically illustrating an example of a hardware configuration of a system mounted on the vehicle 1. The system mounted on the vehicle 1 includes an ECU 10, the display device 20, sensors 41, and electrical equipment 42.

The ECU 10 can be constituted as a computer including a processor (such as a CPU and a GPU), a main memory (such as a RAM and a ROM), and an auxiliary memory (such as an EPROM, a hard disk drive, and a removable medium). In the auxiliary memory, an operating system (OS), various kinds of programs, various kinds of tables, and the like, are stored, and respective functions (software modules) matching predetermined purposes as will be described later can be implemented by programs stored therein being executed. However, some or all of the functions may be, for example, implemented as hardware modules by hardware circuits such as an ASIC and an FPGA. The display device 20, the sensors 41, and the electrical equipment 42 are connected to the ECU 10. Note that in the present embodiment, the ECU 10 corresponds to an "information processing apparatus" according to the present disclosure.

The display device 20 includes the meter display 21, the inner display 22, the outer display 23, the center display 26, and a touch panel 27. The touch panel 27 is a unit for detecting touch operation performed on the meter display 21, the inner display 22, the outer display 23, and the center display 26. The touch panel 27 is arranged at each of the meter display 21, the inner display 22, the outer display 23, and the center display 26. By this means, each display is constituted to allow touch operation. The meter display 21, the inner display 22, the outer display 23, the connection portions 24, 25, and the touch panel 27 may be constituted by deforming a shape of one touch screen.

The sensors 41 are an aggregate of a plurality of sensors for acquiring sensor data to be utilized in traveling of the vehicle 1. The sensors may include a sensor that acquires a physical amount, a sensor that acquires image data, and the like. The sensors 41 include, for example, a sensor that detects a state of the vehicle 1, a sensor that detects action of the driver, and the like. The sensors 41 include, for example, a speed sensor, an acceleration sensor, an accelerator position sensor that detects a position of an accelerator pedal, a brake sensor that detects a position of a brake pedal, a steering wheel angle sensor that detects an angle of the steering wheel, an engine rotation speed sensor that detects an engine rotation speed, a yaw rate sensor, an indicator switch sensor (sensor that detects a state of a switch of an indicator), a shift position sensor, a sensor that detects position information (GPS sensor), a sensor that detects an in-vehicle temperature, a sensor that detects an outside temperature, a radar that measures a distance to an object. Further, the sensors 41 include an illuminance sensor that detects brightness of an environment outside the vehicle 1.

The electrical equipment 42 is an aggregate of electrical equipment to be utilized in the vehicle 1. The electrical equipment 42 includes, for example, an air conditioner, a navigation device, an audio device, a phone, a wiper, a headlight, a sideview mirror, a powered seat, a voice assistant, and the like.

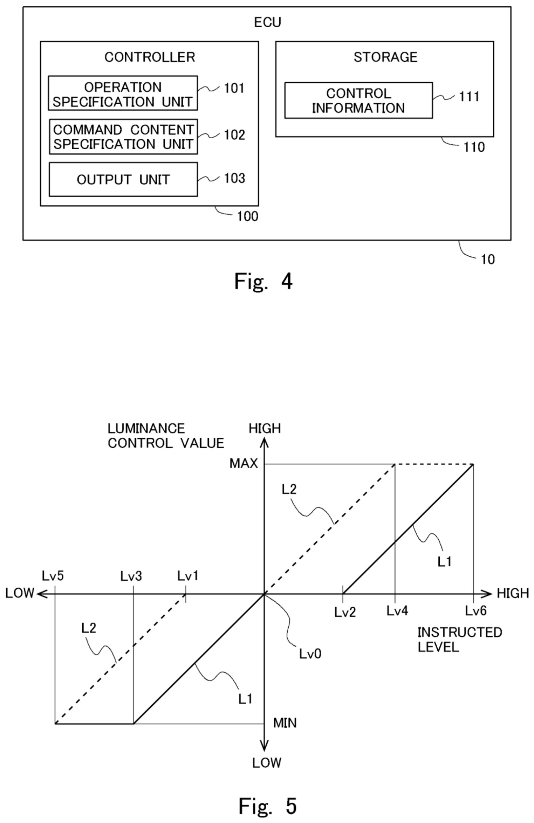

Here, a functional configuration of the ECU 10 will be described based on Fig. 4. Fig. 4 is a block diagram schematically illustrating an example of the functional configuration of the ECU 10. The ECU 10 includes a controller 100 and a storage 110 as functional components. The controller 100 is, for example, a functional component to be provided by the processor executing various kinds of programs stored in an auxiliary storage. The controller 100 includes an operation specification unit 101, a command content specification unit 102, and an output unit 103. The storage 110 is a functional component that stores information. The storage 110 includes a main storage and the auxiliary storage.

The controller 100 executes control of the display device 20 and respective pieces of electrical equipment included in the electrical equipment 42 in accordance with input operation by a user who is an occupant of the vehicle 1. Specifically, the display device 20 accepts a control command from the user via the touch panel 27. In this event, a signal in accordance with the input operation on one of the plurality of displays 21, 22, 23, 26 by the user is transmitted from the touch panel 27 to the ECU 10.

Then, at the controller 100 of the ECU 10, the operation specification unit 101 specifies the input operation on one of the displays by the user based on the signal received from the touch panel 27 of the display device 20. For example, the operation specification unit 101 specifies a portion touched by the user on one of the plurality of displays 21, 22, 23, 26 of the display device 20. Further, the operation specification unit 101 specifies operation content (such as, for example, flick, swipe, tap, pinch, double tap, long tap and multi-tap) of the input operation performed by the user on one of the plurality of displays 21, 22, 23, 26 of the display device 20.

Further, the storage 110 stores control information 111 indicating control content to be performed on the display device 20 or one of a plurality of pieces of electrical equipment included in the electrical equipment 42. In the storage 110, the control information 111 is stored in association with a portion touched by the user on one of the plurality of displays 21, 22, 23, 26 of the display device 20 and operation content of the input operation by the user. Then, the command content specification unit 102 specifies command content of the control command accepted from the user by the display device 20 by checking the portion touched by the user and the operation content of the input operation by the user specified by the operation specification unit 101 against the control information 111 stored in the storage 110.

If the command content specification unit 102 specifies the command content of the control command, the output unit 103 transmits a control signal in accordance with the specified command content to equipment to be controlled (that is, the display device 20 or one of the plurality of pieces of electrical equipment included in the electrical equipment 42). In the equipment to be controlled, control in accordance with the control signal is executed by the control signal transmitted by the output unit 103 being received.

### (Luminance Adjustment)

Luminance adjustment to be performed for the driver's seat displays 21, 22, 23 will be described next. The driver's seat displays 21, 22, 23 are all located in front of the driver's seat in the vehicle interior. Thus, there is a case where the driver of the vehicle 1 may feel that display of the driver's seat displays 21, 22, 23 is too bright. Further, there is also a case where the driver of the vehicle 1 feels it difficult to view the display of the driver's seat displays 21, 22, 23 due to reflection, or the like.

In such cases, the driver can adjust luminance of the driver's seat displays 21, 22, 23. Specifically, the driver can adjust the luminance of the driver's seat displays 21, 22, 23 by performing touch operation on the slider switch for adjusting luminance displayed on the inner display 22. However, a distance between the meter display 21 and the driver is different from a distance between the inner display 22 and the outer display 23, and the driver. In other words, the distance between the driver, and the inner display 22 and the outer display 23 arranged on both sides of the steering wheel 4 so as to pair up with each other is shorter than the distance between the driver and the meter display 21 arranged on a front side of the steering wheel 4.

Thus, from the driver, how display of the meter display 21 looks is different from how display of the inner display 22 and the outer display 23 looks. For example, the driver tends to feel that the display of the inner display 22 and the outer display 23 is brighter than the display of the meter display 21. Further, the driver tends to feel it more difficult to view the display of the meter display 21 than the display of the inner display 22 and the outer display 23. It is considered that these tendencies become more prominent as a result of the inner display 22 and the outer display 23 being arranged at both sides of the steering wheel 4 so as to be inclined toward the driver as described above.

Thus, in the present embodiment, luminance adjustment of the driver's seat displays 21, 22, 23 is executed based on a difference in how the display of the meter display 21 looks and how the display of the inner display 22 and the outer display 23 looks from the driver. Specifically, in the present embodiment, in a case where changing the luminance of the driver's seat displays 21, 22, 23 successively in luminance adjustment of these displays, the ECU 10 starts change of the luminance of the meter display 21 and change of the luminance of the inner display 22 and the outer display 23 at different timings.

Here, in a case where the driver tries to adjust the luminance of the driver's seat displays 21, 22, 23, the driver operates the slider switch for adjusting luminance displayed on the inner display 22. If the slider switch for adjusting luminance displayed on the inner display 22 is operated by the driver, a signal that gives a command to adjust the luminance of the driver's seat displays 21, 22, 23 is transmitted from the touch panel 27 to the ECU 10. In this event, the command signal to be transmitted from the touch panel 27 to the ECU 10 includes information regarding an instructed level of the luminance in the luminance adjustment. The instructed level of the luminance is set in accordance with a position of the slider switch for adjusting luminance operated by the driver.

The ECU 10 receives the command signal transmitted from the touch panel 27. Then, in the ECU 10, the controller 100 calculates luminance control values for controlling the luminance of the driver's seat displays 21, 22, 23 based on the instructed level of the luminance included in the command signal received from the touch panel 27. In this event, the controller 100 calculates each of a luminance control value of the meter display 21 and a luminance control value of the inner display 22 and the outer display 23. Then, the controller 100 transmits the calculated luminance control value of the meter display 21 and the calculated luminance control value of the inner display 22 and the outer display 23 to the display device 20. By this means, in the display device 20, the luminance of the meter display 21 is controlled in accordance with the luminance control value of the meter display 21, and the luminance of the inner display 22 and the outer display 23 is controlled in accordance with the luminance control value of the inner display 22 and the outer display 23.

Here, a control value map to be used by the controller 100 to calculate the luminance control value of the meter display 21 and the luminance control value of the inner display 22 and the outer display 23 will be described based on Fig. 5. Fig. 5 is a view indicating an example of the control value map to be used to calculate the luminance control value of the meter display 21 and the luminance control value of the inner display 22 and the outer display 23. The control value map indicated in Fig. 5 is stored in the storage 110 of the ECU 10 as one type of the control information 111.

The control value map indicated in Fig. 5 indicates the instructed level of the luminance included in the command signal received from the touch panel 27 on a horizontal axis and indicates the luminance control value on a vertical axis. Further, a median value on the horizontal axis in Fig. 5 is a standard level Lv0. If a position of the slider switch for adjusting luminance displayed on the inner display 22 is located at a position of the standard level, the instructed level of the luminance is the standard level Lv0. Further, in the control value map indicated in Fig. 5, a solid line L1 represents a relationship between the luminance control value of the inner display 22 and the outer display 23 and the instructed level of the luminance. On the other hand, in the control value map indicated in Fig. 5, a dashed line L2 represents a relationship between the luminance control value of the meter display 21 and the instructed level of the luminance. If the instructed level of the luminance is the standard level Lv0, both the luminance control value of the meter display 21 and the luminance control value of the inner display 22 and the outer display 23 are standard values. Thus, if the instructed level of the luminance is the standard level Lv0, both the luminance of the meter display 21 and the luminance of the inner display 22 and the outer display 23 are controlled to be standard luminance.

Further, in a case where luminance adjustment of the driver's seat displays 21, 22, 23 requested by the driver is to decrease the luminance of these displays from the standard luminance, the instructed level of the luminance decreases from the standard level Lv0 in accordance with change of the position of the slider switch for adjusting luminance. If the instructed level of the luminance decreases from the standard level Lv0 in the luminance adjustment, as indicated by the solid line L1 in Fig. 5, the luminance control value of the inner display 22 and the outer display 23 decreases in accordance with decrease of the instructed level. Thus, if the instructed level of the luminance decreases from the standard level Lv0, the luminance of the inner display 22 and the outer display 23 immediately decreases.

On the other hand, as indicated by the dashed line L2 in Fig. 5, even if the instructed level of the luminance decreases from the standard level Lv0, while the instructed level of the luminance is from the standard level Lv0 to a first predetermined level Lv1, the luminance control value of the meter display 21 is maintained at the standard value corresponding to the standard level Lv0. Then, if the instructed level of the luminance in the luminance adjustment decreases to be equal to or less than the first predetermined level Lv1, the luminance control value of the meter display 21 decreases in accordance with decrease of the instructed level. Thus, while the instructed level of the luminance is from the standard level Lv0 to the first predetermined level Lv1, the luminance of the meter display 21 is maintained at the standard luminance, and if the instructed level of the luminance further decreases from the first predetermined level Lv1, the luminance of the meter display 21 decreases.

Thus, in a case where luminance adjustment of successively decreasing the luminance of the driver's seat displays 21, 22, 23 from the standard luminance is performed, decrease of the luminance of the meter display 21 and decrease of the luminance of the inner display 22 and the outer display 23 are started at different timings. In other words, in a case where the luminance of the driver's seat displays 21, 22, 23 is successively decreased from the standard luminance, decrease of the luminance of the inner display 22 and the outer display 23 is started first, and then, decrease of the luminance of the meter display 21 is started.

Here, as described above, the driver tends to feel that the display of the inner display 22 and the outer display 23 is brighter than the display of the meter display 21. Thus, as a result of decrease of the luminance of the inner display 22 and the outer display 23 being started before decrease of the luminance of the meter display 21, it is possible to preferentially decrease the luminance of the display for which the driver tends to feel brighter among the driver's seat displays 21, 22, 23.

Further, in a case where luminance adjustment of the driver's seat displays 21, 22, 23 requested by the driver is to increase the luminance of these displays from the standard luminance, the instructed level of the luminance increases from the standard level Lv0 in accordance with change of the position of the slider switch for adjusting luminance. If the instructed level of the luminance in the luminance adjustment increases from the standard level Lv0, as indicated by the dashed line L2 in Fig. 5, the luminance control value of the meter display 21 increases in accordance with increase of the instructed level. Thus, if the instructed level of the luminance increases from the standard level Lv0, the luminance of the meter display 21 immediately increases.

On the other hand, as indicated by the solid line L1 in Fig. 5, even if the instructed level of the luminance increases from the standard level Lv0, while the instructed level of the luminance is from the standard level Lv0 to a second predetermined level Lv2, the luminance control value of the inner display 22 and the outer display 23 is maintained at the standard value corresponding to the standard level Lv0. Then, if the instructed level of the luminance in the luminance adjustment increases to be equal to or higher than the second predetermined level Lv2, the luminance control value of the inner display 22 and the outer display 23 increases in accordance with increase of the instructed level. Thus, while the instructed level of the luminance is from the standard level Lv0 to the second predetermined level Lv2, the luminance of the inner display 22 and the outer display 23 is maintained at the standard luminance, and if the instructed level of the luminance further increases from the second predetermined level Lv2, the luminance of the inner display 22 and the outer display 23 increases.

Thus, even in a case where luminance adjustment of successively increasing the luminance of the driver's seat displays 21, 22, 23 from the standard luminance is performed, increase of the luminance of the meter display 21 and increase of the luminance of the inner display 22 and the outer display 23 are started at different timings. In other words, in a case where the luminance of the driver's seat displays 21, 22, 23 is successively increased from the standard luminance, increase of the luminance of the meter display 21 is started first, and then, increase of the luminance of the inner display 22 and the outer display 23 is started.

Here, as described above, the driver tends to feel it more difficult to view display of the meter display 21 than display of the inner display 22 and the outer display 23. Thus, as a result of increase of the luminance of the meter display 21 being started before increase of the luminance of the inner display 22 and the outer display 23, it is possible to preferentially increase the luminance of the display for which the driver tends to feel it more difficult to view among the driver's seat displays 21, 22, 23.

Note that as indicated by the solid line L1 in Fig. 5, if the instructed level of the luminance decreases from the first predetermined level Lv1 and reaches a third predetermined level Lv3 in the luminance adjustment of the driver's seat displays 21, 22, 23, the luminance control value of the inner display 22 and the outer display 23 reaches the lowest value. Thus, if the instructed level of the luminance reaches the third predetermined level Lv3, the luminance of the inner display 22 and the outer display 23 becomes the lowest luminance. Thus, even if the instructed level of the luminance further decreases from the third predetermined level Lv3, the luminance of the inner display 22 and the outer display 23 is maintained at the lowest luminance corresponding to the third predetermined level Lv3. Further, as indicated by the dashed line L2 in Fig. 5, if the instructed level of the luminance decreases from the third predetermined level Lv3 and reaches a fifth predetermined level Lv5 that is the lowest instructed level in the luminance adjustment of the driver's seat displays 21, 22, 23, the luminance control value of the meter display 21 reaches the lowest value. Thus, if the instructed level of the luminance reaches the fifth predetermined level Lv5, the luminance of the meter display 21 becomes the lowest luminance.

In a case where the instructed level of the luminance is equal to or lower than the first predetermined level Lv1, the luminance control value of the inner display 22 and the outer display 23 and the luminance control value of the meter display 21 transition as described above. Thus, if the instructed level of the luminance that has once decreased to the fifth predetermined level Lv5 increases from the fifth predetermined level Lv5, the luminance control value of the meter display 21 increases in accordance with increase of the instructed level. Thus, if the instructed level of the luminance increases from the fifth predetermined level Lv5, the luminance of the meter display 21 immediately increases. On the other hand, even if the instructed level of the luminance increases from the fifth predetermined level Lv5, while the instructed level of the luminance is from the fifth predetermined level Lv5 to the third predetermined level Lv3, the luminance control value of the inner display 22 and the outer display 23 is maintained at the lowest value. Then, if the instructed level of the luminance increases to be equal to or higher than the third predetermined level Lv3, the luminance control value of the inner display 22 and the outer display 23 increases in accordance with increase of the instructed level.

Thus, also in a case where the luminance of the driver's seat displays 21, 22, 23 is successively increased from the lowest luminance, increase of the luminance of the meter display 21 is started first, and then, increase of the luminance of the inner display 22 and the outer display 23 is started.

Further, as indicated by the dashed line L2 in Fig. 5, if the instructed level of the luminance increases to higher than the second predetermined level Lv2 and reaches a fourth predetermined level Lv4 in the luminance adjustment of the driver's seat displays 21, 22, 23, the luminance control value of the meter display 21 reaches the highest value. Thus, if the instructed level of the luminance reaches the fourth predetermined level Lv4, the luminance of the meter display 21 becomes the highest luminance. Thus, even if the instructed level of the luminance further increases from the fourth predetermined level Lv4, the luminance of the meter display 21 is maintained at the highest luminance corresponding to the fourth predetermined level Lv4. Further, as indicated by the solid line L1 in Fig. 5, if the instructed level of the luminance increases to higher than the fourth predetermined level Lv4 and reaches a sixth predetermined level Lv6 that is the highest instructed level in the luminance adjustment of the driver's seat displays 21, 22, 23, the luminance control value of the inner display 22 and the outer display 23 reaches the highest value. Thus, if the instructed level of the luminance reaches the sixth predetermined level Lv6, the luminance of the inner display 22 and the outer display 23 becomes the highest luminance.

In a case where the instructed level of the luminance is equal to or higher than the second predetermined level Lv2, the luminance control value of the inner display 22 and the outer display 23 and the luminance control value of the meter display 21 transition as described above. Thus, if the instructed level of the luminance that has once increased to the sixth predetermined level Lv6 decreases from the sixth predetermined level Lv6, the luminance control value of the inner display 22 and the outer display 23 decreases in accordance with decrease of the instructed level. Thus, if the instructed level of the luminance decreases from the sixth predetermined level Lv6, the luminance of the inner display 22 and the outer display 23 immediately decrease. On the other hand, even if the instructed level of the luminance decreases from the sixth predetermined level Lv6, while the instructed level of the luminance is from the sixth predetermined level Lv6 to the fourth predetermined level Lv4, the luminance control value of the meter display 21 is maintained at the highest value. Then, if the instructed level of the luminance decreases to be equal to or lower than the fourth predetermined level Lv4, the luminance control value of the meter display 21 decreases in accordance with decrease of the instructed level.

Thus, also in a case where the luminance of the driver's seat displays 21, 22, 23 is successively decreased from the highest luminance, decrease of the luminance of the inner display 22 and the outer display 23 is started first, and then, decrease of the luminance of the meter display 21 is started.

### (Control Flow)

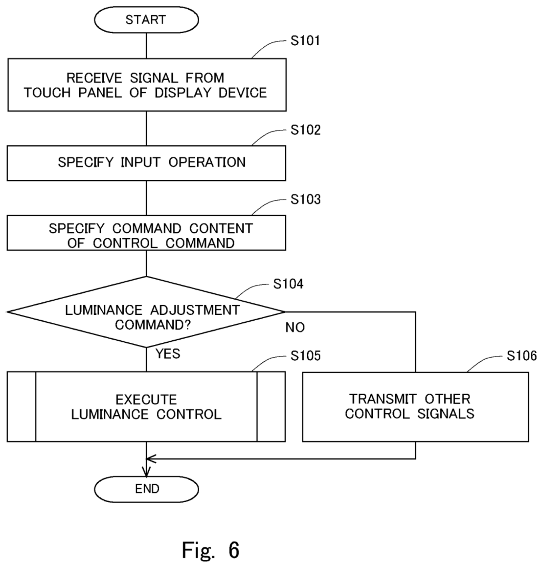

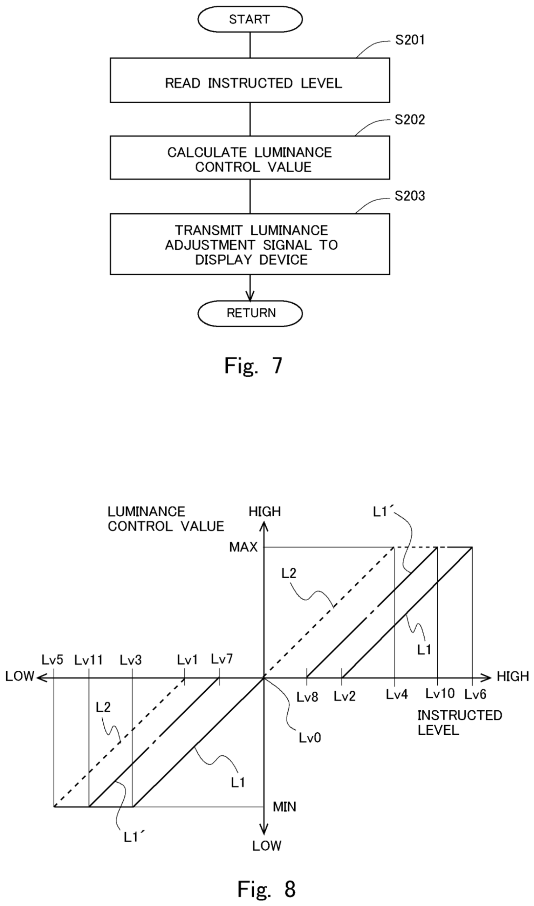

Flow of luminance adjustment control of adjusting the luminance of the driver's seat displays 21, 22, 23 will be described below based on Fig. 6 and Fig. 7. Fig. 6 and Fig. 7 are flowcharts indicating flow of luminance adjustment control according to the present embodiment. The present flow is executed by the controller 100 of the ECU 10.

In the present flow, first, in S101, a signal in accordance with the input operation by the user, transmitted from the touch panel 27 of the display device 20 is received. Then, in S102, the input operation by the user on one of the plurality of driver's seat displays 21, 22, 23 of the display device 20 is specified based on the signal received in S101. As described above, the processing in S102 is executed by the operation specification unit 101. Then, in S103, command content of the control command accepted from the user by the display device 20 is specified based on the input operation by the user specified in S102. As described above, the processing in S103 is executed by the command content specification unit 102.

Here, in a case where the input operation by the user is operation on the slider switch for adjusting luminance displayed on the inner display 22 of the display device 20, a signal that gives a command to adjust the luminance of the driver's seat displays 21, 22, 23 provided in the display device 20 is received in S101. In this event, it is specified in S102 that the input operation by the user is operation on the slider switch for adjusting luminance displayed on the inner display 22. Further, an operation direction and an operation amount of the slider switch for adjusting luminance are also specified. Further, it is specified in S103 that the command content of the control command accepted from the user is luminance adjustment of the driver's seat displays 21, 22, 23. Further, a direction (increase or decrease of luminance) of the luminance adjustment is also specified based on the operation direction and the operation amount of the slider switch for adjusting luminance.

Then, subsequent to the processing in S103, processing in S104 is executed. In S104, it is specified whether or not the command content of the control command specified in S103 is luminance adjustment of the driver's seat displays 21, 22, 23. In a case where negative determination is made in S104, that is, in a case where the command content of the control command accepted by the display device 20 from the user is control other than luminance adjustment of the driver's seat displays 21, 22, 23, processing in S106 is executed next. In S106, a control signal for executing control in accordance with the command content of the control command accepted by the display device 20 from the user is transmitted to a device for which the control command is issued. By this means, control in accordance with the control command is executed in the device for which the control command is issued.

On the other hand, in a case where positive determination is made in S104, processing in S105 is executed next. In S105, luminance adjustment of successively changing the luminance of the driver's seat displays 21, 22, 23 is performed by the flow indicated in Fig. 7 being repeatedly executed.

In the flow indicated in Fig. 7, first, in S201, the instructed level of the luminance included in the command signal to adjust luminance received from the touch panel 27 is read. Then, in S202, the luminance control value of the meter display 21 and the luminance control value of the inner display 22 and the outer display 23 are calculated based on the instructed level of the luminance read in S201. In this event, the respective luminance control values are calculated using the control value map indicated in Fig. 5, stored in the storage 11.

Then, in S203, a control signal for executing luminance control is transmitted to the display device 20. In this event, the control signal to be transmitted to the display device 20 includes the luminance control value of the meter display 21 and the luminance control value of the inner display 22 and the outer display 23 calculated in S202. As described above, the processing in S203 is executed by the output unit 103. After the processing in S203 is executed, the processing from S201 to S103 is executed again. By this means, in the display device 20, luminance control of successively changing the luminance of the driver's seat displays 21, 22, 23 is performed.

According to the above-described flow, in a case where the display device 20 accepts a luminance adjustment command to successively change the luminance of the driver's seat displays 21, 22, 23, the luminance of the driver's seat displays 21, 22, 23 is changed in accordance with the instructed level of the luminance. In this event, change of the luminance of the meter display 21 and change of the luminance of the inner display 22 and the outer display 23 are started at different timings. It is therefore possible to adjust the luminance of the meter display 21, and the inner display 22 and the outer display 23 provided in the front portion of the vehicle interior to luminance suitable for the driver.

Note that the order of change of the luminance of the meter display 21 and change of the luminance of the inner display 22 and the outer display 23 in the luminance adjustment of the driver's seat displays 21, 22, 23 does not necessarily have to be the order as described above. For example, the order of change of the luminance of the meter display 21 and change of the luminance of the inner display 22 and the outer display 23 in the luminance adjustment of the driver's seat displays 21, 22, 23 may be freely set by the driver. In this case, the control value map to be used to calculate the luminance control value of the meter display 21 and the luminance control value of the inner display 22 and the outer display 23 is generated by the ECU 10 in accordance with the order of change of the luminance set by the driver.

### <Second Embodiment>

Also in the present embodiment, the hardware configuration of the system mounted on the vehicle 1 is similar to that of the first embodiment. Further, also in the present embodiment, in a similar manner to the first embodiment, in a case where changing the luminance of the driver's seat display 21, 22, 23 successively in the luminance adjustment of these displays, the ECU 10 starts change of the luminance of the meter display 21 and change of the luminance of the inner display 22 and the outer display 23 at different timings. However, the present embodiment is different from the first embodiment in a way of luminance adjustment of the inner display 22 and the outer display 23. Luminance adjustment for the driver's seat displays 21, 22, 23 in the present embodiment will be described below.

The inner display 22 and the outer display 23 are respectively arranged on both sides of the steering wheel 4 so as to sandwich the steering wheel 4 therebetween. However, the inner display 22 is located on the inner side of the steering wheel 4 in the vehicle 1, and the outer display 23 is located on the outer side of the steering wheel 4 in the vehicle 1, and thus, how display of the display 22 looks from the driver is different from how display of the display 23 looks from the driver. For example, there is a case where the driver feels that the display of the inner display 22 is brighter than the display of the outer display 23. Further, there is also a case where the driver feels it more difficult to view the display of the outer display 23 than the display of the inner display 22.

Thus, in the present embodiment, luminance adjustment of the driver's seat displays 21, 22, 23 is executed based on a difference between how the display of the inner display 22 looks and how the display of the outer display 23 looks from the driver. Specifically, in the present embodiment, in a case where changing the luminance of the driver's seat displays 21, 22, 23 successively, the ECU 10 starts change of the luminance of the inner display 22 and change of the luminance of the outer display 23 at different timings.

As described above, if the slider switch for adjusting luminance displayed on the inner display 22 is operated by the driver, a signal that gives a command to adjust the luminance of the driver's seat displays 21, 22, 23 is transmitted from the touch panel 27 to the ECU 10. Then, in the ECU 10, the controller 100 calculates the luminance control values for controlling the luminance of the driver's seat displays 21, 22, 23 based on the instructed level of the luminance included in the command signal received from the touch panel 27. In this event, the controller 100 calculates the luminance control value of the meter display 21. Further, the controller 100 separately calculates the luminance control value of the inner display 22 and the luminance control value of the outer display 23. Then, the controller 100 transmits the calculated luminance control value of the meter display 21, the calculated luminance control value of the inner display 22, and the calculated luminance control value of the outer display 23 to the display device 20. By this means, in the display device 20, the luminance of the meter display 21 is controlled in accordance with the luminance control value of the meter display 21. Further, in the display device 20, the luminance of the inner display 22 is controlled in accordance with the luminance control value of the inner display 22, and the luminance of the outer display 23 is controlled in accordance with the luminance control value of the outer display 23.

Here, the control value map to be used by the controller 100 to calculate the luminance control value of the meter display 21, the luminance control value of the inner display 22, and the luminance control value of the outer display 23 will be described based on Fig. 8. Fig. 8 is a view indicating an example of the control value map to be used to calculate the luminance control value of the meter display 21, the luminance control value of the inner display 22, and the luminance control value of the outer display 23. The control value map indicated in Fig. 8 is stored in the storage 110 of the ECU 10 as one type of the control information 111.

The control value map indicated in Fig. 8 indicates the instructed level of the luminance included in the command signal received from the touch panel 27 on a horizontal axis, and indicates the luminance control value on a vertical axis. The solid line L1 and the dashed line L2 in Fig. 8 are the same as the solid line L1 and the dashed line L2 in Fig. 5. Further, in Fig. 8, the dashed line L2 represents a relationship between the luminance control value of the meter display 21 and the instructed level of the luminance in a similar manner to the dashed line L2 in Fig. 5. On the other hand, in Fig. 8, the solid line L1 represents a relationship between the luminance control value of the inner display 22 and the instructed level of the luminance. Further, in Fig. 8, a dashed-dotted line L1' represents a relationship between the luminance control value of the outer display 23 and the instructed level of the luminance.

If the instructed level of the luminance in the luminance adjustment decreases from the standard level Lv0, as indicated by the solid line L1 in Fig. 8, the luminance control value of the inner display 22 decreases in accordance with decrease of the instructed level. Thus, if the instructed level of the luminance decreases from the standard level Lv0, the luminance of the inner display 22 immediately decreases. In contrast, as indicated by the dashed-dotted line L1' in Fig. 8, even if the instructed level of the luminance decreases from the standard level Lv0, while the instructed level of the luminance is from the standard level Lv0 to a seventh predetermined level Lv7, the luminance control value of the outer display 23 is maintained at the standard value corresponding to the standard level Lv0. Note that the seventh predetermined level Lv7 is a level higher than the first predetermined level Lv1. Further, if the instructed level of the luminance in the luminance adjustment decreases to be equal to or lower than the seventh predetermined level Lv7, the luminance control value of the outer display 23 decreases in accordance with decrease of the instructed level. Thus, while the instructed level of the luminance is from the standard level Lv0 to the seventh predetermined level Lv7, the luminance of the outer display 23 is maintained at the standard luminance, and if the instructed level of the luminance further decreases from the seventh predetermined level Lv7, the luminance of the outer display 23 decreases. Then, if the instructed level of the luminance becomes equal to or lower than the first predetermined level Lv1, the luminance of the meter display 21 decreases.

Thus, in a case where luminance adjustment of successively decreasing the luminance of the driver's seat displays 21, 22, 23 from the standard luminance, decrease of the luminance of the meter display 21, decrease of the luminance of the inner display 22, and decrease of the luminance of the outer display 23 are started at different timings. In other words, in a case where the luminance of the driver's seat displays 21, 22, 23 is successively decreased from the standard luminance, decrease of the luminance of the inner display 22 is started first, and then, decrease of the luminance of the outer display 23 is started. Then, decrease of the luminance of the meter display 21 is started subsequent to the decrease of the luminance of the outer display 23.

Further, if the instructed level of the luminance in the luminance adjustment increases from the standard level Lv0, the luminance of the meter display 21 immediately increases. On the other hand, even if the instructed level of the luminance in the luminance adjustment increases from the standard level Lv0, as indicated by the solid line L1 in Fig. 8, while the instructed level of the luminance is from the standard level Lv0 to the second predetermined level Lv2, the luminance control value of the inner display 22 is maintained at the standard value corresponding to the standard level Lv0. Then, if the instructed level of the luminance in the luminance adjustment increases to be equal to or higher than the second predetermined level Lv2, the luminance control value of the inner display 22 increases in accordance with increase of the instructed level. In contrast, as indicated by the dashed-dotted line L1' in Fig. 8, even if the instructed level of the luminance increases from the standard level Lv0, the luminance control value of the outer display 23 does not immediately increase. In other wors, while the instructed level of the luminance is from the standard level Lv0 to an eighth predetermined level Lv8, the luminance control value of the outer display 23 is also maintained at the standard value corresponding to the standard level Lv0 in a similar manner to the luminance control value of the inner display 22. Note that the eighth predetermined level Lv8 is a level lower than the second predetermined level Lv2. Then, if the instructed level of the luminance in the luminance adjustment increases to be equal to or higher than the eighth predetermined level Lv8, the luminance control value of the outer display 23 increases in accordance with increase of the instructed level. Thus, while the instructed level of the luminance is from the standard level Lv0 to the eighth predetermined level Lv8, the luminance of the outer display 23 is maintained at the standard luminance, and if the instructed level of the luminance further increases from the eighth predetermined level Lv8, the luminance of the outer display 23 increases.

Thus, in a case where luminance adjustment of successively increasing the luminance of the driver's seat displays 21, 22, 23 from the standard luminance is performed, increase of the luminance of the meter display 21, increase of the luminance of the inner display 22, and increase of the luminance of the outer display 23 are started at different timings. In other words, in a case where the luminance of the driver's seat displays 21, 22, 23 is successively increased from the standard luminance, increase of the luminance of the meter display 21 is started first, and then, increase of the luminance of the outer display 23 is started. Then, increase of the luminance of the inner display 22 is started subsequent to the increase of the luminance of the outer display 23.

Note that as indicated by the dashed-dotted line L1' in Fig. 8, if the instructed level of the luminance decreases to lower than the seventh predetermined level Lv7 and reaches an eleventh predetermined level Lv11 in the luminance adjustment of the driver's seat displays 21, 22, 23, the luminance control value of the outer display 23 reaches the lowest value. Thus, if the instructed level of the luminance reaches the eleventh predetermined level Lv11, the luminance of the outer display 23 becomes the lowest luminance. Note that the eleventh predetermined level Lv11 is a level lower than the third predetermined level Lv3 and lower than the fifth predetermined level Lv5. Thus, if the instructed level of the luminance that has once decreased to the fifth predetermined level Lv5 increases from the fifth predetermined level Lv5, the luminance control value of the meter display 21 immediately increases in accordance with increase of the instructed level. On the other hand, while the instructed level of the luminance is from the fifth predetermined level Lv5 to the eleventh predetermined level Lv11, the luminance control value of the outer display 23 is maintained at the lowest value. Then, if the instructed level of the luminance increases to be equal to or higher than the eleventh predetermined level Lv11, the luminance control value of the outer display 23 increases in accordance with increase of the instructed level. Further, while the instructed level of the luminance is from the fifth predetermined level Lv5 to the third predetermined level Lv3, the luminance control value of the inner display 22 is maintained at the lowest value. Then, if the instructed level of the luminance increases to be equal to or higher than the third predetermined level Lv3, the luminance control value of the inner display 22 increases in accordance with increase of the instructed level.

Thus, also in a case where the luminance of the driver's seat displays 21, 22, 23 is successively increased from the lowest luminance, increase of the luminance of the meter display 21 is started first, and then, increase of the luminance of the outer display 23 is started. Then, increase of the luminance of the inner display 22 is started subsequent to the increase of the luminance of the outer display 23.

Further, as indicated by the dashed-dotted line L1' in Fig. 8, if the instructed level of the luminance increases to higher than the eighth predetermined level Lv8 and reaches a tenth predetermined level Lv10 in the luminance adjustment of the driver's seat displays 21, 22, 23, the luminance control value of the outer display 23 reaches the highest value. Thus, if the instructed level of the luminance reaches the tenth predetermined level Lv10, the luminance of the outer display 23 becomes the highest luminance. Note that the tenth predetermined level Lv10 is a level higher than the fourth predetermined level Lv4 and lower than the sixth predetermined level Lv6. Thus, if the instructed level of the luminance that has once increased to the sixth predetermined level Lv6 decreases from the sixth predetermined level Lv6, the luminance control value of the inner display 22 immediately decreases in accordance with decrease of the instructed level. On the other hand, while the instructed level of the luminance is from the sixth predetermined level Lv6 to the tenth predetermined level Lv10, the luminance control value of the outer display 23 is maintained at the highest value. Then, if the instructed level of the luminance decreases to be equal to or lower than the tenth predetermined level Lv10, the luminance control value of the outer display 23 decreases in accordance with decrease of the instructed level. Further, while the instructed level of the luminance is from the sixth predetermined level Lv6 to the fourth predetermined level Lv4, the luminance control value of the meter display 21 is maintained at the highest value. Then, if the instructed level of the luminance decreases to be equal to or lower than the fourth predetermined level Lv4, the luminance control value of the meter display 21 decreases in accordance with decrease of the instructed level.

Thus, also in a case where the luminance of the driver's seat displays 21, 22, 23 is successively decreased from the highest luminance, decrease of the luminance of the inner display 22 is started first, and then, decrease of the luminance of the outer display 23 is started. Then, decrease of the luminance of the meter display 21 is started subsequent to the decrease of the luminance of the outer display 23.

According to the above, change of the luminance of the meter display 21, change of the luminance of the inner display 22, and change of the luminance of the outer display 23 are started at different timings. Thus, not only for the meter display 21, but also for the inner display 22 and the outer display 23, the luminance of the displays can be adjusted in accordance with how display of the respective displays looks from the driver.

Note that in one example of the control value map indicated in Fig. 8, in a case of luminance adjustment of decreasing the luminance of the driver's seat displays 21, 22, 23, decrease of the luminance is started in order of the inner display 22 and the outer display 23. Further, in a case of luminance adjustment of increasing the luminance of the driver's seat displays 21, 22, 23, increase of the luminance is started in order of the outer display 23 and the inner display 22. However, the order in which change of the luminance of the inner display 22 and the outer display 23 is started is not limited to these orders. In other words, in a case of luminance adjustment of decreasing the luminance of the driver's seat displays 21, 22, 23, decrease of the luminance may be started in order of the outer display 23 and the inner display 22. Further, in a case of luminance adjustment of increasing the luminance of the driver's seat displays 21, 22, 23, increase of the luminance may be started in order of the inner display 22 and the outer display 23.

The order in which the luminance of the inner display 22 and the outer display 23 is changed in the luminance adjustment of the driver's seat displays 21, 22, 23 may be freely set by the driver. In this case, the control value map to be used to calculate the luminance control value of the meter display 21, the luminance control value of the inner display 22, and the luminance control value of the outer display 23 is generated by the ECU 10 in accordance with the order in which the luminance is changed, set by the driver.

### <Modification 1>

In the first embodiment and the second embodiment described above, the luminance adjustment to be performed for the driver's seat displays 21, 22, 23 of the display device 20 has been described. Here, in the display device 20, the luminance of the center display 26 may be adjusted in accordance with the luminance adjustment of the driver's seat displays 21, 22, 23. In this case, the luminance of the center display 26 is changed along with the luminance of the driver's seat displays 21, 22, 23 by the slider switch for adjusting luminance displayed on the inner display 22 being operated by the driver.

In a similar manner to the driver's seat displays 21, 22, 23, the center display 26 is also provided in the front portion of the vehicle interior. However, a positional relationship between the center display 26 and the driver of the vehicle 1 is different from the positional relationship between the driver's seat displays 21, 22, 23 and the driver of the vehicle 1. Specifically, the center display 26 is located diagonally forward of the driver instead of being located in front of the driver in the vehicle interior. Thus, how the display of the driver's seat displays 21, 22, 23 looks from the driver is different from how the display of the center display 26 looks. For example, the driver is less likely to feel that the display of the center display 26 is too bright than the display of the driver's seat displays 21, 22, 23. Further, the driver is more likely to feel it difficult to view the display of the center display 26 than the display of the driver's seat displays 21, 22, 23.

Thus, in the present modification, luminance adjustment of the driver's seat displays 21, 22, 23 and the center display 26 is executed based on the difference between how the display of the driver's seat displays 21, 22, 23 looks from the driver and how the display of the center display 26 looks from the driver. Specifically, in the present modification, in a case where changing the luminance of the driver's seat displays 21, 22, 23 and the center display 26 successively in the luminance adjustment of these displays, the ECU 10 starts change of the luminance of the driver's seat displays 21, 22, 23 and change of the luminance of the center display 26 at different timings.

Specifically, in a case where the luminance of the driver's seat displays 21, 22, 23 and the center display 26 is successively decreased, decrease of the luminance of the center display 26 may be started after decrease of the luminance of the driver's seat displays 21, 22, 23. By this means, it is possible to preferentially decrease the luminance of the display for which the driver tends to feel brighter among the driver's seat displays 21, 22, 23 and the center display 26.

On the other hand, in a case where the luminance of the driver's seat displays 21, 22, 23 and the center display 26 is successively increased, increase of the luminance of the center display 26 may be started before increase of the luminance of the driver's seat displays 21, 22, 23. By this means, it is possible to preferentially increase the luminance of the display for which the driver tends to feel it more difficult to view among the driver's seat displays 21, 22, 23 and the center display 26.

Note that the order in which the luminance of the driver's seat displays 21, 22, 23 and the center display 26 is changed in the luminance adjustment of the displays does not necessarily have to be the orders as described above. For example, the order in which the luminance of the driver's seat displays 21, 22, 23 and the center display 26 is changed in the luminance adjustment of the displays may be freely set by the driver.

### <Modification 2>

In the first embodiment and the second embodiment described above, the luminance of the driver's seat displays 21, 22, 23 is adjusted by the user operating the slider switch for adjusting luminance displayed on the inner display 22. Here, the sensors 41 provided in the vehicle 1 include an illuminance sensor that detects brightness of the environment outside the vehicle. Further, if the brightness of the environment outside the vehicle changes, it is considered that how the display of the driver's seat displays 21, 22, 23 looks from the driver changes. Thus, in the vehicle 1, luminance adjustment of the driver's seat displays 21, 22, 23 may be automatically performed based on a detection value of the illuminance sensor provided in the vehicle 1.

In this case, the display device 20 accepts a luminance adjustment command to successively change the luminance of the driver's seat displays 21, 22, 23, the luminance adjustment command being input in accordance with change of the detection value of the illuminance sensor. In this event, the instructed level of the luminance included in the luminance adjustment command changes in accordance with change of the detection value of the illuminance sensor. For example, it is considered that the driver is more likely to feel that display of the driver's seat displays 21, 22, 23 is too bright as the environment outside the vehicle becomes darker. Thus, the instructed level of the luminance may decrease in accordance with decrease of the detection value of the illuminance sensor. On the other hand, it is considered that the driver is likely to feel it more difficult to view the display of the driver's seat displays 21, 22, 23 as the environment outside the vehicle becomes brighter. Thus, the instructed level of the luminance may increase in accordance with increase of the detection value of the illuminance sensor.

Further, also in a case where the instructed level of the luminance changes in accordance with change of the detection value of the illuminance sensor, the ECU 10 controls the luminance of the driver's seat displays 21, 22, 23 in a similar manner to a case where the instructed level of the luminance changes in accordance with operation on the slider switch for adjusting luminance. By this means, also in a case where brightness outside the vehicle changes, it is possible to adjust the luminance of the driver's seat displays 21, 22, 23 to luminance more suitable for the driver.

Further, luminance control in accordance with change of the detection value of the illuminance sensor in Modification 2 described above may be also applied to luminance adjustment of the driver's seat displays 21, 22, 23 and the center display 26 in Modification 1 described above.

### <Other Embodiments>

The above-described embodiments are merely one example, and the present disclosure can be implemented while change is made as appropriate within a range not deviating from the gist of the present disclosure. Further, the processing and the means described in the present disclosure can be implemented by being freely combined unless technical inconsistencies arise.

Further, the processing described as being performed by one device may be shared and executed by a plurality of devices. Alternatively, the processing described as being performed by different devices may be executed by one device. In a computer system, what kind of hardware configurations (server configurations) are used to implement respective functions can be flexibly changed.

The present disclosure can be also implemented by a computer program implementing the functions described in the above embodiments being supplied to a computer, and one or more processors included in the computer reading and executing the program. Such a computer program may be provided to the computer by a non-transitory computer-readable storage medium that can be connected to a system bus of the computer or may be provided to the computer via a network. The non-transitory computer-readable storage medium includes, for example, any type of disc such as a magnetic disc (such as a Floppy (registered trademark) disc and a hard disc drive (HDD)), and an optical disc (such as a CD-ROM, a DVD disc and a Blu-ray disc), and any type of medium appropriate for storing an electronic command such as a read only memory (ROM), a random access memory (RAM), an EPROM, an EEPROM, a magnetic card, a flash memory, or an optical card.

## Claims

1. An in-vehicle system comprising a display device (20) and an information processing apparatus (10) that controls the display device (20), the display device (20) including a plurality of display units including at least a first display unit (21) arranged in front of a steering wheel in front of a driver's seat in a vehicle interior, and a pair of second display units (22, 23) arranged at positions on both sides of the steering wheel while protruding more rearward in a vehicle than the first display unit (21),
the information processing apparatus (10) comprising a controller (100) configured to execute:
in a case where changing luminance of the plurality of display units successively, starting change of the luminance of the first display unit (21) and change of the luminance of the pair of second display units (22, 23) at different timings.

2. The in-vehicle system according to claim 1, wherein in a case where decreasing the luminance of the plurality of display units successively, the controller (100) starts decrease of the luminance of the pair of second display units (22, 23) before decrease of the luminance of the first display unit (21).

3. The in-vehicle system according to claim 2, wherein
when an instructed level of luminance in luminance adjustment of the plurality of display units is equal to or lower than a standard level, the controller (100) decreases the luminance of the pair of second display units (22, 23) in accordance with decrease of the instructed level, and
while the instructed level is equal to or lower than the standard level and higher than a first predetermined level, the controller (100) maintains the luminance of the first display unit (21) at luminance corresponding to the standard level, and when the instructed level is equal to or lower than the first predetermined level, the controller (100) decreases the luminance of the first display unit (21) in accordance with decrease of the instructed level.

4. The in-vehicle system according to claim 1, wherein in a case where increasing the luminance of the plurality of display units successively, the controller (100) starts increase of the luminance of the first display unit (21) before increase of the luminance of the pair of second display units (22, 23).

5. The in-vehicle system according to claim 4, wherein
when an instructed level of luminance in luminance adjustment of the plurality of display units is equal to or higher than a standard level, the controller (100) increases the luminance of the first display unit (21) in accordance with increase of the instructed level, and
while the instructed level is equal to or higher than the standard level and lower than a second predetermined level, the controller (100) maintains the luminance of the pair of second display units (22, 23) at luminance corresponding to the standard level, and when the instructed level is equal to or higher than the second predetermined level, the controller (100) increases the luminance of the pair of second display units (22, 23) in accordance with increase of the instructed level.

6. The in-vehicle system according to claim 1, wherein the controller (100) is configured to further execute, in a case where changing the luminance of the plurality of display units successively, starting change of the luminance of one second display unit of the pair of second display units (22, 23) and change of the luminance of the other second display unit of the pair of second display units (22, 23) at different timings.

7. The in-vehicle system according to claim 6, wherein in a case where decreasing the luminance of the plurality of display units successively, the controller (100) starts decrease of the luminance of the other second display unit of the pair of second display units (22, 23) before decrease of the luminance of the one second display unit of the pair of second display units (22, 23).

8. The in-vehicle system according to claim 6, wherein in a case where increasing the luminance of the plurality of display units successively, the controller (100) starts increase of the luminance of the one second display unit of the pair of second display units (22, 23) before increase of the luminance of the other second display unit of the pair of second display units (22, 23).

9. The in-vehicle system according to claim 1, wherein
the plurality of display units of the display device (20) further comprise a third display unit (26) arranged at an intermediate position between a driver's seat and a passenger's seat in a front portion of the vehicle interior, and
the controller (100) is configured to further execute, in a case where changing the luminance of the plurality of display units successively, starting change of the luminance of the third display unit (26) at a timing different from timings of change of the luminance of the first display unit (21) and change of the luminance of the pair of second display units (22, 23).

10. The in-vehicle system according to claim 9, wherein in a case where decreasing the luminance of the plurality of display units successively, the controller (100) starts decrease of the luminance of the third display unit (26) after decrease of the luminance of the first display unit (21).

11. The in-vehicle system according to claim 9, wherein in a case where increasing the luminance of the plurality of display units successively, the controller (100) starts increase of the luminance of the third display unit (26) before increase of the luminance of the first display unit (21).

12. The in-vehicle system according to claim 1, wherein in a case where the display device (20) accepts a luminance adjustment command to successively change the luminance of the plurality of display units, the luminance adjustment command being input by operation of a user, the controller (100) successively changes the luminance of the plurality of display units.

13. The in-vehicle system according to claim 12, wherein
each of the pair of second display units (22, 23) includes a touch panel (27), and
the display device (20) accepts the luminance adjustment command that is input by touch operation by the user on the touch panel (27).

14. The in-vehicle system according to claim 1, wherein in a case where the display device (20) accepts a luminance adjustment command to successively change the luminance of the plurality of display units, the luminance adjustment command being input in accordance with change of a detection value of a sensor that is provided in the vehicle and detects brightness of an environment outside the vehicle, the controller (100) successively changes the luminance of the plurality of display units.

15. An information processing apparatus (10) that controls a display device (20) including a plurality of display units including at least a first display unit (21) arranged in front of a steering wheel in front of a driver's seat in a vehicle interior, and a pair of second display units (22, 23) arranged at positions on both sides of the steering wheel while protruding more rearward in a vehicle than the first display unit (21),
the information processing apparatus (10) comprising a controller (100) configured to execute:
in a case where changing luminance of the plurality of display units successively, starting change of the luminance of the first display unit (21) and change of the luminance of the pair of second display units (22, 23) at different timings.
